(19)

Europäisches
Patentamt
European
Patent Office
Office européen
des brevets

(11)  EP 3 712 799 A1

(12)  EUROPEAN PATENT APPLICATION

(43) Date of publication:
    23.09.2020   Bulletin 2020/39

(51) Int Cl.:
    G06F 30/10 (2020.01)          B33Y 50/00 (2015.01)
    G06F 119/18 (2020.01)

(21) Application number: 19210313.3

(22) Date of filing: 20.11.2019

(84) Designated Contracting States:
    AL AT BE BG CH CY CZ DE DK EE ES FI FR GB
    GR HR HU IE IS IT LI LT LU LV MC MK MT NL NO
    PL PT RO RS SE SI SK SM TR
    Designated Extension States:
    BA ME
    Designated Validation States:
    KH MA MD TN

(30) Priority: 18.03.2019  US 201916356731

(71) Applicant: The Boeing Company
    Chicago, IL 60606-2016 (US)

(72) Inventor: TYLER, Christopher
    Chicago, IL 60606-2016 (US)

(74) Representative: Boult Wade Tennant LLP
    Salisbury Square House
    8 Salisbury Square
    London EC4Y 8AP (GB)

(54)  **AUTOMATED METHOD FOR SUPPORT MATERIAL PLACEMENT IN ADDITIVE MANUFACTURING FOR IMPROVED FINISH MACHINING PERFORMANCE**

(57)    Methods and devices using a computer-generated design of an AM part to ensure that the part is design to support additional manufacturing steps. The methods include performing frequency analysis on a computer-generated design of the manufactured part and calculating mode shapes at natural frequencies of the computer-generated design. A static compliance is calculated at points on the computer-generated design using each of the mode shapes. The static compliance indicates an expected displacement at each of the plurality of points when the computer generated design is exposed to a predetermined non-dynamic load.

FIG. 9

EP 3 712 799 A1

**Description**

**BACKGROUND**

Additive manufacturing is utilized to fabricate 3-dimensional (3D) parts by adding layer-upon-layer of material. Additive manufacturing may utilize 3D-modeling (Computer-Aided Design or CAD) software to design and form a part. Additive manufacturing encompasses a wide variety of technologies and incorporates a wide variety of techniques, such as, but not limited to, laser freeform manufacturing (LFM), laser deposition (LD), direct metal deposition (DMD), laser metal deposition, laser additive manufacturing, laser engineered net shaping (LENS), stereolithography (SLA), selective laser sintering (SLS), fused deposition modeling (FDM), multi jet modeling (MJM), 3D printing, rapid prototyping, direct digital manufacturing, layered manufacturing, and additive fabrication. Moreover, a variety of raw materials may be used in additive manufacturing to create the part. Examples include but are not limited to plastics, metals, concrete, and glass.
To improve the surface finish of a part fabricated with additive-manufacturing equipment, separate post-processing steps may be implemented using conventional surface-finishing equipment and techniques. The AM part should be constructed to withstand the forces applied during the post-processing steps.

**SUMMARY**

Some examples are directed to methods of designing a manufactured part. The methods include performing frequency analysis on a computer-generated design of the manufactured part and calculating mode shapes at natural frequencies of the computer-generated design. The methods include calculating a static compliance at a plurality of points on the computer-generated design using the mode shapes. The methods include generating a total compliance map of the computer generated design that includes the static compliance at the plurality of points, the total compliance map with an expected displacement at the plurality of points when the computer generated design is exposed to a predetermined non-dynamic load. The methods include outputting the total compliance map.
In some examples, the methods include determining that the expected displacement at one or more of the plurality of points exceeds an allowable amount, and modifying the computer-generated design by adding material that forms one or more structural supports.
In some examples, the methods include using the modified computer-generated design and manufacturing an actual part made from a material.
In some examples, the methods include removing the material that forms the one or more structural supports while manufacturing the actual part.
In some examples, the methods include manufacturing the actual part with an additive manufacturing process.
In some examples, the methods include calculating the static compliance at the plurality of points on the computer-generated design according to:

$$StaticCompliance = \sum_{i=1}^{j} \left( \frac{\Phi_{i,k}}{2\pi \{f_{n,i}\}_k} \right)^2$$

where j is the number of mode shapes calculated for points, k, on the model
$\Phi_i$ = mass-normalized mode shape displacement at the point
$f_{n,i}$ = natural frequency in units of Hertz.

In some examples, the modified computer-generated designs are designed for use on an aircraft.
In some examples, the methods include manufacturing the actual part with the material that forms one or more structural supports with an additive manufacturing process, reducing a roughness of a surface of the actual part while the material is integrated into the actual part, and removing the material that forms the one or more structural supports after reducing the surface roughness of the actual part.
Some examples are directed to methods of designing a manufactured part. The methods include calculating mode shapes at natural frequencies of a computer-generated design of the manufactured part. The methods include calculating a total static compliance of points on the computer-generated design using the mode shapes with the total static compliance comprising an expected displacement throughout the computer generated design when the computer generated design is exposed to a predetermined non-dynamic load. The methods include identifying one or more areas of the computer-generated design for additional material for structural support responsive to the total static compliance.
In some examples, the methods include generating a total compliance map of the computer generated design comprising the static compliance at points on the design, and outputting the total compliance map.

In some examples, the methods include using a mass normalized mode shape displacement for the natural frequencies and calculating the total static compliance.

In some examples, the methods include determining that the expected displacement exceeds an allowable amount at the one or more areas on the computer generated design, and modifying the computer-generated design by adding material for one or more structural supports at the one or more areas.

In some examples, the methods include manufacturing an actual part from a material using the computer-generated design.

In some examples, the methods include manufacturing an actual part from a material using the computer-generated design and including the material that forms the one or more structural supports, performing a surfacing process on the actual part while the part includes the material that forms the one or more structural supports, and removing the material that forms the one or more structural supports after performing the surfacing process.

In some examples, the methods include manufacturing the actual part using an additive manufacturing process.

In some examples, identifying the one or more of the areas of the computer-generated design for the additional material for structural support responsive to the total static compliance comprises determining that the one or more areas have a total static compliance value above a predetermined threshold.

Some examples are directed to computer-readable storage media comprising instructions that, when executed by a processing circuit of a computing device, cause the processing circuit to perform operations comprising: performing frequency analysis on a computer-generated design of a manufactured part and calculating mode shapes at natural frequencies of the computer-generated design; calculating a static compliance at a plurality of points on the computer-generated design using each of the mode shapes; and generating a total compliance map of the computer generated part comprising the static compliance at each of the plurality of points with the total compliance map comprising an expected displacement at each of the plurality of points when the computer generated design is exposed to a predetermined non-dynamic load.

In some examples, the computer-readable storage media are configured for the processing circuit to output the total compliance map.

In some examples, the computer-readable storage media are configured for the processing circuit to determine that the expected displacement at one or more of the plurality of points exceeds an allowable amount; and modify the computer-generated design by adding material forming one or more structural supports.

In some examples, the computer-generated designs are designed for use on an aircraft.

The features, functions and advantages that have been discussed can be achieved independently in various examples or may be combined in yet other examples, further details of which can be seen with reference to the following description and the drawings.

Further, the disclosure comprises examples according to the following clauses:

Clause 1. A method of designing a manufactured part, the method comprising:
performing frequency analysis on a computer-generated design (30) of the manufactured part and calculating mode shapes (40) at natural frequencies of the computer-generated design (30); calculating a static compliance at a plurality of points (31) on the computer-generated design (30) using the mode shapes (40); generating a total compliance map (50) of the computer generated design (30) comprising the static compliance at the plurality of points (31), the total compliance map (50) comprising an expected displacement at the plurality of points (31) when the computer generated design (30) is exposed to a predetermined non-dynamic load; and outputting the total compliance map (50) and, optionally, displaying the outputted total compliance map (50) to a user.

Clause 2. The method of clause 1, further comprising: determining that the expected displacement at one or more of the plurality of points (31) exceeds an allowable amount; and modifying the computer-generated design (30) by adding material that forms one or more structural supports.

Clause 3. The method of clause 2, further comprising using the modified computer-generated design (30) and manufacturing an actual part (60) made from a material.

Clause 4. The method of clause 3, further comprising manufacturing the actual part (60) with an additive manufacturing process.

Clause 5. The method of clause 3, further comprising removing the material that forms the one or more structural supports while manufacturing the actual part (60).

Clause 6. The method of clause 5, further comprising manufacturing the actual part (60) with an additive manufacturing process.

Clause 7. The method of clause 6, wherein manufacturing the actual part (60) with an additive manufacturing process comprises manufacturing the actual part (60) with the material that forms the one or more structural supports with an additive manufacturing process; the method further comprising reducing a roughness of a surface of the actual part (60) while the material that forms the one or more structural supports is integrated into the actual part (60); and

wherein removing the material that forms the one or more structural supports while manufacturing the actual part (60) comprises removing the material that forms the one or more structural supports after reducing the surface roughness of the actual part (60).

Clause 8. The method of any of clauses 1-7, further comprising calculating the static compliance at the plurality of points (31) on the computer-generated design (30) according to:

$$StaticCompliance = \sum_{i=1}^{j} \left( \frac{\Phi_{i,k}}{2\pi \{f_{n,i}\}_k} \right)^2$$

where j is mode shapes (40) calculated for points (31), k, on the computer-generated design (30),
$\Phi_i$ is a mass normalized mode shape displacement at the point (31), and
$f_{n,i}$ is the natural frequency in units of Hertz.

Clause 9. The method of any of clauses 1-8, wherein the modified computer-generated design (30) is designed for use on an aircraft.

Clause 10. A method of designing a manufactured part, the method comprising: calculating mode shapes (40) at natural frequencies of a computer-generated design (30) of the manufactured part; calculating a total static compliance of points (31) on the computer-generated design (30) using the mode shapes (40), the total static compliance comprises an expected displacement throughout the computer generated design (30) when the computer generated design (30) is exposed to a predetermined non-dynamic load; and identifying one or more areas of the computer-generated design (30) for additional material for structural support responsive to the total static compliance.

Clause 11. The method of clause 10, further comprising: generating a total compliance map (50) of the computer generated design (30) comprising the total static compliance at points (31) on the design (30); and outputting the total compliance map (50) and, optionally, displaying the outputted total compliance map (50) to a user.

Clause 12. The method of clause 10 or 11, further comprising using a mass normalized mode shape displacement for the natural frequencies and calculating the total static compliance.

Clause 13. The method of any of clauses 10-12, further comprising: determining that the expected displacement exceeds an allowable amount at the one or more areas on the computer generated design (30); and modifying the computer-generated design (30) by adding material for one or more structural supports at the one or more areas.

Clause 14. The method of any of clauses 10-13, further comprising manufacturing an actual part (60) from a material using the computer-generated design (30).

Clause 15. The method of clause 13 or 14, further comprising: manufacturing an actual part (60) from a material using the computer-generated design (30) and including the material that forms the one or more structural supports; performing a surfacing process on the actual part (60) while the part (60) includes the material that forms the one or more structural supports; and removing the material that forms the one or more structural supports after performing the surfacing process optionally, further comprising manufacturing the actual part (60) using an additive manufacturing process.

Clause 16. The method of any of clauses 10-15, wherein identifying the one or more of the areas of the computer-generated design (30) for the additional material for structural support responsive to the total static compliance comprises determining that the one or more areas have a total static compliance value above a predetermined threshold.

Clause 17. The method of any of clauses 1-16, wherein the natural frequencies are the frequencies at which the manufactured part modeled would vibrate.

Clause 18. The method of any of clauses 1-17, wherein the mode shapes (40) are the shapes that the manufactured part would tend to assume when vibrating at the natural frequencies.

Clause 19. The method of any of clauses 1-18, wherein static compliance is the expected amount of displacement per unit force for the plurality of points of the manufactured part.

Clause 20. The method of any of clauses 1-19, wherein total static compliance is the overall expected amount of displacement for the plurality of points of the manufactured part.

Clause 21. The method of any of clauses 1-20, wherein performing the frequency analysis on the computer-generated design (30) and calculating mode shapes (40) at the natural frequencies of the computer-generated design (30) comprises performing the frequency analysis and calculating mode shapes (40) at natural frequencies of the computer-generated design (30) excited by one or more post-processing steps.

Clause 22. The method of clause 21, wherein the one or more post-processing steps comprises reducing a roughness of a surface of the actual part (60).

Clause 23. The method of clause 2 or any of clauses 3-9 and 17-20 when dependent upon clause 2, wherein modifying the computer-generated design (30) by adding material that forms one or more structural supports comprises adding the material at at least one of the one or more of the plurality of points (31) that exceeds an allowable amount.

Clause 24. The method of clause 13 or any of clauses 10-20 when dependent upon clause 13, wherein the adding material that forms one or more structural supports comprises adding the material at at least one of the one or more of the plurality of points (31) that exceeds an allowable amount.

Clause 25. A computer-readable storage medium comprising instructions that, when executed by a processing circuit of a computing device, cause the processing circuit to perform operations comprising: performing frequency analysis on a computer-generated design (30) of a manufactured part and calculating mode shapes (40) at natural frequencies of the computer-generated design (30); calculating a static compliance at a plurality of points (31) on the computer-generated design (30) using each of the mode shapes (40); and generating a total compliance map (50) of the computer generated part comprising the static compliance at each of the plurality of points (31), the total compliance map (50) comprising an expected displacement at each of the plurality of points (31) when the computer generated design (30) is exposed to a predetermined non-dynamic load.

Clause 26. The computer-readable storage medium of clause 25, further comprising the processing circuit outputting the total compliance map 50 and, optionally, displaying the outputted total compliance map (50) to a user.

Clause 27. The computer-readable storage medium of clause 25 or 26, wherein the processing circuit is further configured to: determine that the expected displacement at one or more of the plurality of points 31 exceeds an allowable amount; and modify the computer-generated design (30) by adding material forming one or more structural supports.

Clause 28. The computer-readable storage medium of any of clauses 25-27, further comprising designing the computer-generated design (30) for use on an aircraft.

Clause 29. The readable storage medium of any of any of clauses 25-28, wherein the natural frequencies are the frequencies at which the manufactured part modeled would vibrate.

Clause 30. The readable storage medium of any of any of clauses 25-29, wherein the mode shapes (40) are the shapes that the manufactured part would tend to assume when vibrating at the natural frequencies.

Clause 31. The readable storage medium of any of any of clauses 25-27, wherein static compliance is the expected amount of displacement per unit force for the plurality of points of the manufactured part.

Clause 32. The readable storage medium of any of any of clauses 25-31, wherein total static compliance is the overall expected amount of displacement for the plurality of points of the manufactured part.

Clause 33. The readable storage medium of any of clauses 25-32, wherein performing the frequency analysis on the computer-generated design (30) and calculating mode shapes (40) at the natural frequencies of the computer-generated design (30) comprises performing the frequency analysis and calculating mode shapes (40) at natural frequencies of the computer-generated design (30) excited by one or more post-processing steps.

Clause 34. The method of clause 33, wherein the one or more post-processing steps comprises reducing a roughness of a surface of the actual part (60).

Clause 35. The method of clause 27 or any of clauses 28-34 when dependent upon clause 27, wherein modifying the computer-generated design (30) by adding material that forms one or more structural supports comprises adding the material at at least one of the one or more of the plurality of points (31) that exceeds an allowable amount.

Clause 36. A computer program comprising computer program instructions that, when executed by a computer processor, cause the computer processor to perform the method of any of clauses 1-24.

Clause 37. A computer readable storage medium having stored thereon the computer program of clause 36.

Clause 38. A computer system comprising a computer processor and a memory, wherein the memory has stored therein a computer program comprising computer program instructions that, when executed by the computer processor, cause the computer system to perform the method of any of clauses 1-24.

Clause 39. An additive manufacturing apparatus comprising a computer processor and a memory, wherein the memory has stored therein a computer program comprising computer program instructions that, when executed by the computer processor, cause the additive manufacturing apparatus to perform the method of any of clauses 1-24.

## BRIEF DESCRIPTION OF THE DRAWINGS

Figure 1 is schematic diagram of a computing device.
Figure 2 is perspective view of a graphic depiction of a computer-generated design for an AM part.
Figure 3 is a flowchart diagram of a method of analyzing an AM part using a computer-generated design.
Figure 4 is a perspective view of a graphic depiction of a first mode shape.

Figure 5 is a perspective view of a graphic depiction of a second mode shape.
Figure 6 is a perspective view of a graphic depiction of a third mode shape.
Figure 7 is a flowchart diagram of a method of calculating a total static compliance map.
Figure 8 is a perspective view of a total static compliance map.
Figure 9 is a flowchart diagram of a method of designing an AM part using a computer-generated model.
Figure 10 is perspective view of a graphic depiction of a computer-generated design that includes additional material for structural support.
Figure 11 is a flowchart diagram of a method of manufacturing an AM part.
Figure 12 is a perspective view of an AM part that includes additional materials that provide structural support.

## DETAILED DESCRIPTION

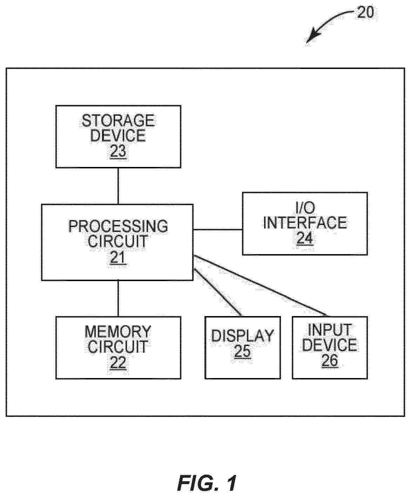

Figure 1 illustrates a computing device 20 configured to support computer-implemented methods and computer-executable program instructions (or code) during the testing, analysis, and design of a part. For example, the computing device 20, or portions thereof, can execute instructions to perform the operations described herein with respect to the various methods for designing and analyzing the part. The computing device 20, or portions thereof, can further execute instructions according to any of the methods described herein.

The computing device 20 can include a processing circuit 21. The processing circuit 21 can include one or more microprocessors, microcontrollers, Application Specific Integrated Circuits (ASICs), or other programmable devices. The processing circuit 21 can be configured to execute program code stored within a memory circuit 22. The memory circuit 22 can include volatile memory devices (e.g., random access memory (RAM) devices), nonvolatile memory devices (e.g., read-only memory (ROM) devices, programmable read-only memory, and flash memory), or both. The memory circuit 22 can include an operating system that can include a basic/input output system for booting the computing device 20 as well as a full operating system to enable the computing device 20 to interact with users, other programs, and other devices.

The memory circuit 22 can include one or more applications that can be executable by the processing circuit 21. As an example, the one or more applications can include instructions executable by the processing circuit 21 to receive a reference design that includes geometrical information associated with a part. The one or more applications can further include instructions executable by the processing circuit 21 that calculates and analyzes the effects of various tests performed at different frequencies. The one or more applications can also include instructions executable by the processing circuit 21 to determine an amount of deflection of one or more points on the part during the testing.

The processing circuit 21 can communicate with one or more storage devices 23. For example, the one or more storage devices 23 can include nonvolatile storage devices, such as magnetic disks, optical disks, or flash memory devices. The storage devices 23 can include both removable and non-removable memory devices. The storage devices 23 can be configured to store an operating system, images of operating systems, applications, and program data. In some examples, the memory circuit 22, the storage devices 23, or both, include tangible computer-readable media.

The processing circuit 21 can also communicate with one or more input/output interfaces 24 that enable the computing device 20 to communicate with one or more devices to facilitate user interaction. The processing circuit 21 can detect interaction events based on user input received via the input/output interfaces 24.

In some examples, a display 25 provides viewable information for the user. The display 25 can comprise any known electronic display, such as a liquid crystal display. Inputs 26 can include a keyboard, mouse, control buttons, and other like devices. The inputs 26 provide for the user to enter various commands and make menu selections for menus presented on the display 25.

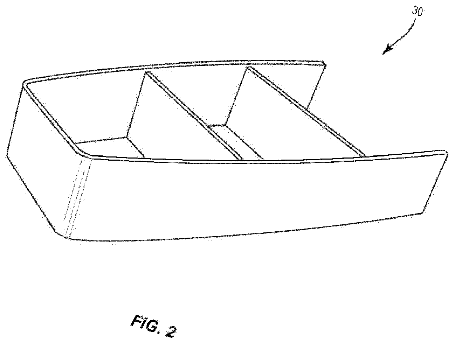

The computing device 20 is configured to analyze a computer-generated design 30. As illustrated in Figure 2, the design 30 can be processed by the computing device 20 and a graphical depiction can be outputted for viewing on the display 25. The design 30 can include a complete description of the shape and composition of an AM part, or can include a more basic description of the AM part with design features that are not fully complete.

The disclosed methods provide for analyzing the design 30 to determine where additional material is needed for structural support, if any, to accommodate post-processing manufacturing steps. These additional manufacturing steps can include a variety of different steps that can be performed after an initial version of the AM part is formed during the manufacturing process. In some examples, the post-processing steps include treating the surface of the AM part to remove roughness along one or more surfaces that result from the layered manufacturing of the AM process.

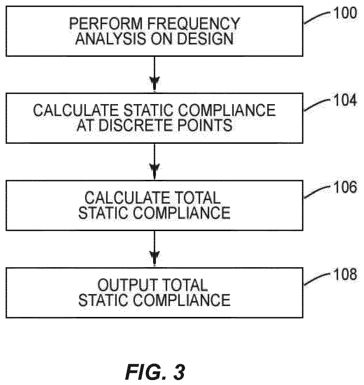

Figure 3 illustrates a method of analyzing the design 30. Prior to the analysis, the computing device 20 obtains the design 30. The design 30 can be a computer-aided design 3D model of the AM part. The design 30 can be received from an outside source through the input/output interface 24 or through the storage device 23. The computing device 20 can also be configured to generate the design 30, such as through various computer-aided design programs that can run on the computing device 20.

The method includes performing frequency analysis on the design 30 (block 100). The frequency analysis calculates the natural frequency of the design 30 which is the lowest frequency at which the corresponding AM part modeled in the design 30 would vibrate. The analysis also replicates the mode shape that the design 30 would tend to assume when vibrating at the natural frequency.

The testing can be performed using finite element analysis software that is stored in the memory circuit 22 or otherwise available to the processing circuit 21. One example of finite element analysis and computer-aided engineering software is Abaqus/CAE available from Dassault Systemes. The analysis software can take into account aspects that can affect the natural frequency, such as the geometry of the AM part, the material properties and mass, support conditions such as fixtures that are used to secure the AM part, and in-plane loads.

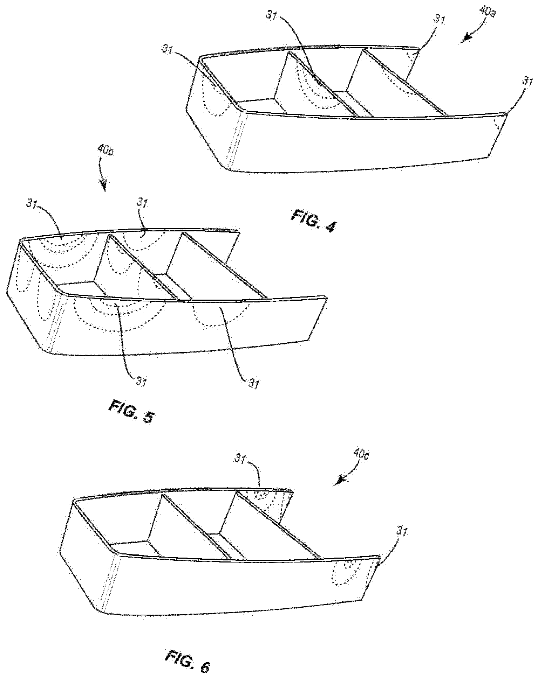

Figure 4 illustrates a graphical depiction of the mode shape 40a at the natural frequency (i.e., the normal mode). As illustrated, the mode shape 40a illustrates the expected relative displacements of points of the design 30 when the design 30 is vibrated at the natural frequency. As illustrated, many of the points on the design 30 do not experience much if any displacement. However, one or more points 31 on the design 30 experience a larger amount of vibrating movement.

The computing device 20 can be configured to output the mode shape 40a to the display 25. The graphic display can include the points 31 illustrated in a manner to emphasize the magnitude of the flexibility. This can include different coloring, shading, surface indicia, or other visual manner of demonstrating relative differences in flexibility.

The frequency analysis also includes calculating mode shapes of the design 30 at higher frequencies. This can include frequencies at multiples of the natural frequency. These modes shapes are the shape which the design 30 tends to assume when vibrated at the specific frequencies. These corresponding mode shapes at each of the higher frequencies result in different amounts of flexibility at the different points 31 of the design 30. Figure 5 illustrates a mode shape 40b at a second natural frequency, and Figure 6 illustrates a mode shape 40c at a third natural frequency. As illustrated, the natural frequencies can include different points 31 of the design 30 having relatively high flexibility.

The method calculates a static compliance at discrete points of the design 30 (block 104). The static compliance is the expected amount of displacement per unit force for the points of the design 30. The static compliance calculates how the part will displace when under a predetermined non-dynamic load. The static compliance provides an insight into part deformation given a static force estimate. In one example, the static compliance is measured in inches per pound.

The static compliance is calculated using the mode shapes for each of the discrete points of the design 30 at each of the analyzed natural frequencies. The static compliance for each point is determined using Equation 1:

$$StaticCompliance = \sum_{i=1}^{j} \left( \frac{\Phi_{i,k}}{2\pi \{f_{n,i}\}_k} \right)^2$$

where j is the number of mode shapes calculated for points, k, on the model
$\Phi_i$ = mass-normalized mode shape displacement at the point
$f_{n,i}$ = natural frequency in units of Hertz.

In one design, k is calculated for a predetermined number of discrete points on the computer-generated design. In one specific design, k is calculated for all points on the computer-generated design.

The method then calculates a total static compliance for the design 30 (block 106). The total static compliance is the overall expected amount of displacement for the discrete points of the design 30. The total static compliance for the design can be output (block 108). The output can then be used for additional testing and analysis of the design 30.

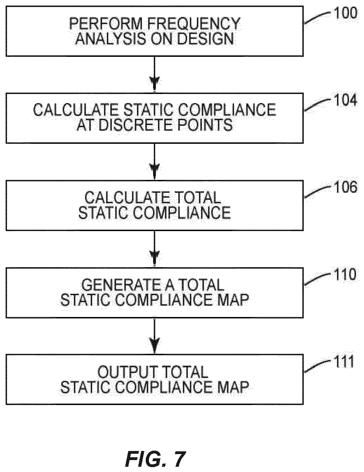

Another method can include calculating a total static compliance map of the design 30. Figure 7 illustrates a method that includes performing frequency analysis on the design 30 (block 100), calculating a static compliance at discrete points of the design 30 (block 104) and calculating a total static compliance of the design 30 (block 106) as explained above.

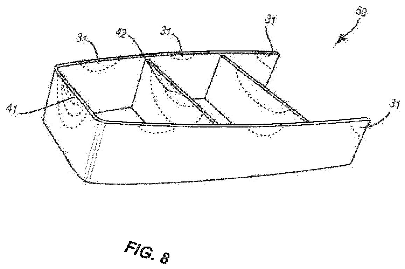

The method also includes generating a total static compliance map of the design 30 (block 110). The total static compliance map 50 includes a graphical depiction of the design 30 with an expected displacement at each of the discrete points 31 when the design 30 is exposed to a predetermined non-dynamic load. Figure 8 illustrates a graphical display of a total static compliance map 50 of the design 30. As illustrated in Figure 8, the design 30 can be displayed in a manner that highlights the relative flexibilities of the different points. This can include coloring, shading, surface indicia, or other visual manner of demonstrating relative differences in flexibility. The total static compliance map 50 can be output for use and further analysis (block 111).

The total static compliance of the design 30 can be used to determine if the design needs additional material for structural support to perform one or more post-processing steps. One example includes whether the design can withstand forces applied during surface finishing that occurs during post-processing. In the event one or more points exceed an expected displacement when exposed to a predetermined non-dynamic load, additional material for structural support can be added to the design 30 to prevent and/or reduce the amount of displacement.

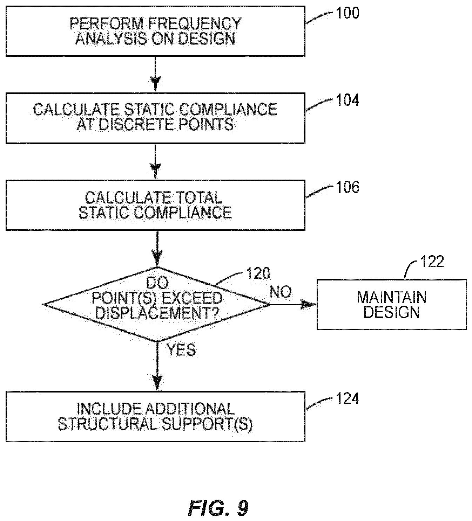

Figure 9 includes a method of designing an AM part using a design 30. Steps 100-106 are performed as explained above. The design is further analyzed to determine whether any points exceed a predetermined displacement (block 120). This calculation compares the total static compliance of the points of the design 30 relative to a predetermined displacement amount. The design remains without requiring additional material if no points exceed the predetermined displacement amount (block 122). Thus, the design 30 can withstand the expected amount of force applied to the AM part without deforming to an amount that prevents or reduces the effectiveness of subsequent post-processing step(s).

If any points exceed the predetermined displacement amount, additional material for structural support is added to the design 30 (block 124). The additional material prevents or reduces the displacement thus providing for the design 30 to withstand the subsequent manufacturing processes.

Figure 8 illustrates a total static compliance map 50 that illustrates this issue. The total static compliance map 50 indicates that points 41, 42 have a flexibility in excess of a predetermined amount of displacement. Subsequent manufacturing steps would not be effective when performed on these points 41, 42 due to the high flexibility.

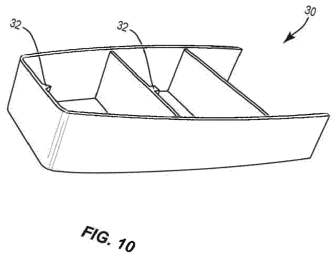

Additional material is added to the design 30 at the points 41, 42 to address the issue. Figure 10 illustrates a graphical depiction of the design 30 that now includes the material for structural supports 32 at the high flexibility areas. The size and shape of the structural supports 32 can vary depending upon the specific design criteria.

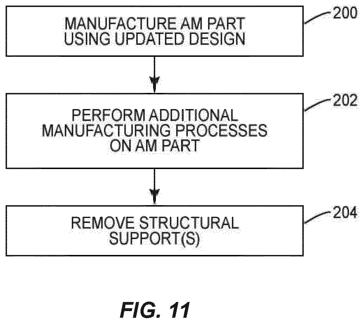

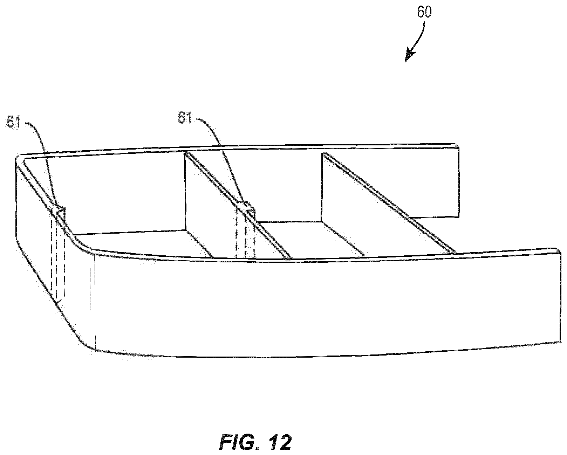

The updated design is then used to manufacture an AM part 60. Figure 11 illustrates a method of using the updated design 30 to manufacture an AM part 60. The method includes manufacturing an initial phase of the AM part 60 that includes the additional material for structural supports 61 (block 200). Figure 12 illustrates this initial phase of the AM part 60 that includes material for structural supports 61 at the areas of high flexibility.

The method then includes performing one or more additional processing steps on the AM part 60 (block 202). In one design, the additional processing steps include finishing the surface of the AM part 60 to remove roughness using conventional surface-finishing equipment and techniques. These techniques provide a more desirable AM part 60 and can prevent undesirable effects such as limited applicability of the AM part 60 due to stress risers typically associated with high surface roughness, and difficultly in use with non-destructive inspection systems because rough surface finishes generate high levels of noise in such systems.

Once the one or more post-processing steps are completed, the additional material that formed the structural supports 61 are removed from the AM part 60 (block 204). Thus, the additional material provides support just during the time that post-processing steps are being performed on the AM part 60. Once finished, the material is removed.

The finished AM part 60 can be used in a variety of different environments. One specific use is for a vehicle. Vehicles can include but are not limited to manned aircraft, unmanned aircraft, manned spacecraft, unmanned spacecraft, manned rotorcraft, unmanned rotorcraft, satellites, rockets, missiles, manned terrestrial vehicles, unmanned terrestrial vehicles, manned surface water borne vehicles, unmanned surface water borne vehicles, manned sub-surface water borne vehicles, unmanned sub-surface water borne vehicles, and combinations thereof.

The methods disclosed above can be used for designing and manufacturing an additively manufactured part. The methods can also be used for designing and manufacturing parts made from other manufacturing processes.

The present examples are to be considered in all respects as illustrative and not restrictive, and all changes coming within the meaning and equivalency range of the appended claims are intended to be embraced therein.

## Claims

1.  A method of designing a manufactured part, the method comprising:

     performing frequency analysis on a computer-generated design (30) of the manufactured part and calculating mode shapes (40) at natural frequencies of the computer-generated design (30);
     calculating a static compliance at a plurality of points (31) on the computer-generated design (30) using the mode shapes (40);
     generating a total compliance map (50) of the computer-generated design (30) comprising the static compliance at the plurality of points (31), the total compliance map (50) comprising an expected displacement at the plurality of points (31) when the computer generated design (30) is exposed to a predetermined non-dynamic load; and
     outputting the total compliance map (50).

2.  The method of claim 1, further comprising:

     determining that the expected displacement at one or more of the plurality of points (31) exceeds an allowable amount; and

modifying the computer-generated design (30) by adding material that forms one or more structural supports.

3. The method of claim 2, further comprising using the modified computer-generated design (30) and manufacturing an actual part (60) made from a material, optionally with an additive manufacturing process.

4. The method of claim 3, further comprising removing the material that forms the one or more structural supports while manufacturing the actual part (60).

5. The method of claim 4, further comprising manufacturing the actual part (60) with an additive manufacturing process.

6. The method of claim 5,
   wherein manufacturing the actual part (60) with an additive manufacturing process comprises manufacturing the actual part (60) with the material that forms the one or more structural supports with an additive manufacturing process;
   the method further comprising reducing a roughness of a surface of the actual part (60) while the material that forms the one or more structural supports is integrated into the actual part (60); and
   wherein removing the material that forms the one or more structural supports while manufacturing the actual part (60) comprises removing the material that forms the one or more structural supports after reducing the surface roughness of the actual part (60).

7. The method of any of claims 1-6, further comprising calculating the static compliance at the plurality of points (31) on the computer-generated design (30) according to:

$$StaticCompliance = \sum_{i=1}^{j} \left( \frac{\Phi_{i,k}}{2\pi\{f_{n,i}\}_k} \right)^2$$

where j is mode shapes (40) calculated for points (31), k, on the computer-generated design (30),
$\Phi_i$ is a mass normalized mode shape displacement at the point (31), and
$f_{n,i}$ is a natural frequency in units of Hertz.

8. The method of any of claims 1-7, wherein the modified computer-generated design (30) is designed for use on an aircraft.

9. A computer program comprising computer program instructions that, when executed by a computer processor, cause the computer processor to perform the method of any of claims 1-8.

10. A computer readable storage medium having stored thereon the computer program of claim 9.

11. A computer system comprising a computer processor and a memory, wherein the memory has stored therein a computer program comprising computer program instructions that, when executed by the computer processor, cause the computer system to perform the method of any of claims 1-8.

12. An additive manufacturing apparatus comprising a computer processor and a memory, wherein the memory has stored therein a computer program comprising computer program instructions that, when executed by the computer processor, cause the additive manufacturing apparatus to perform the method of any of claims 1-8.

20

STORAGE
DEVICE
23

PROCESSING
CIRCUIT
21

I/O
INTERFACE
24

MEMORY
CIRCUIT
22

DISPLAY
25

INPUT
DEVICE
26

**FIG. 1**

30

FIG. 2

**FIG. 3**

FIG. 4

FIG. 5

FIG. 6

PERFORM FREQUENCY
ANALYSIS ON DESIGN — 100

CALCULATE STATIC COMPLIANCE
AT DISCRETE POINTS — 104

CALCULATE TOTAL
STATIC COMPLIANCE — 106

GENERATE A TOTAL
STATIC COMPLIANCE MAP — 110

OUTPUT TOTAL
STATIC COMPLIANCE MAP — 111

**FIG. 7**

FIG. 8

PERFORM FREQUENCY ANALYSIS ON DESIGN — 100

CALCULATE STATIC COMPLIANCE AT DISCRETE POINTS — 104

CALCULATE TOTAL STATIC COMPLIANCE — 106

DO POINT(S) EXCEED DISPLACEMENT? — 120

MAINTAIN DESIGN — 122

NO

YES

INCLUDE ADDITIONAL STRUCTURAL SUPPORT(S) — 124

*FIG. 9*

FIG. 10

```
┌─────────────────────────────┐
│   MANUFACTURE AM PART       │──── 200
│   USING UPDATED DESIGN      │
└─────────────────────────────┘
              │
              ▼
┌─────────────────────────────┐
│   PERFORM ADDITIONAL        │──── 202
│ MANUFACTURING PROCESSES     │
│        ON AM PART           │
└─────────────────────────────┘
              │
              ▼
┌─────────────────────────────┐
│    REMOVE STRUCTURAL        │──── 204
│      SUPPORT(S)             │
└─────────────────────────────┘
```

*FIG. 11*

*FIG. 12*

Europäisches
Patentamt

European
Patent Office

Office européen
des brevets

## EUROPEAN SEARCH REPORT

Application Number

EP 19 21 0313

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QINGNAN ZHOU ET AL: "Worst-case structural analysis", ACM TRANSACTIONS ON GRAPHICS (TOG) - SIGGRAPH 2013 CONFERENCE, vol. 32:4, 21 July 2013 (2013-07-21), pages 137:1-137:11, XP055320870, DOI: 10.1145/2461912.2461967 * the whole document * * page 2, column 2, paragraph 2 * * page 4, column 1, last paragraph - column 2, paragraph 1 * * figure 7 * | 1-12 | INV. G06F30/10 B33Y50/00 ADD. G06F119/18 |
| X | US 2018/093419 A1 (LAPPAS TASSO [US] ET AL) 5 April 2018 (2018-04-05) * the whole document * * paragraph [0054] * * paragraph [0172] - paragraph [0174] * * paragraph [0257]; figure 17 * * figures 15a-15d * | 1-12 | |
| A | WO 2018/209029 A1 (MARKFORGED INC [US]) 15 November 2018 (2018-11-15) * the whole document * * paragraph [0003] * * paragraph [0123] * | 1-12 | TECHNICAL FIELDS SEARCHED (IPC) G06F B33Y |

The present search report has been drawn up for all claims

| Place of search | Date of completion of the search | Examiner |
|---|---|---|
| Munich | 28 July 2020 | Wellisch, J |

**EP 3 712 799 A1**

## ANNEX TO THE EUROPEAN SEARCH REPORT
## ON EUROPEAN PATENT APPLICATION NO.

EP 19 21 0313

28-07-2020

| Patent document cited in search report | Publication date | Patent family member(s) | Publication date |
|---|---|---|---|
| US 2018093419 A1 | 05-04-2018 | US 2018093418 A1<br>US 2018093419 A1<br>US 2018095450 A1<br>WO 2018064349 A1 | 05-04-2018<br>05-04-2018<br>05-04-2018<br>05-04-2018 |
| WO 2018209029 A1 | 15-11-2018 | EP 3634724 A1<br>WO 2018209029 A1 | 15-04-2020<br>15-11-2018 |

EPO FORM P0459

For more details about this annex : see Official Journal of the European Patent Office, No. 12/82